# FASCICULE DE BREVET EUROPEEN

(11) **EP 2 139 711 B1**
(45) Date de publication et mention de la délivrance du brevet: **31.07.2013**
(21) Numéro de dépôt: 08736466.7
(22) Date de dépôt: 22.04.2008
(51) Int. Cl.: B60J 1/20

(54) **STORE POUR VEHICULE AUTOMOBILE, NOTAMMENT POUR VITRE DE PORTIERE, ET VEHICULE AUTOMOBILE CORRESPONDANT**
JALOUSIE FÜR EIN KRAFTFAHRZEUG, IM BESONDEREN FÜR EIN TÜRFESNTER UND ENTSPRECHENDES MOTORFAHRZEUG
BLIND FOR A MOTOR VEHICLE, PARTICULARLY FOR A DOOR WINDOW, AND CORRESPONDING MOTOR VEHICLE

(30) Priorité: 25.04.2007 FR 0703023
(43) Date de publication de la demande: 06.01.2010
(73) Titulaire: Advanced Comfort Systems France SAS - ACS France, 79300 Bressuire (FR)
(72) Inventeur: NEAUX, Jean-Claude, F-79300 Terves (FR); GUILLOTEAU, Sébastien, F-79350 Faye L'Abbesse (FR)
(74) Mandataire: Bioret, Ludovic
(86) Numéro de dépôt international: PCT/EP2008/054874
(87) Numéro de publication internationale: WO 2008/132102

(56) Documents cités:
- EP-A- 1 123 824
- DE-A1- 10 245 901
- DE-A1-102004 013 451
- DE-A1-102005 023 967
- DE-U1- 29 818 809
- DE-U1-202004 020 177
- DE-U1-202007 008 186

## Description

### 1. Domaine de l'invention

Le domaine de l'invention est celui des véhicules automobiles, et plus précisément de la protection des occupants d'un tel véhicule contre l'éblouissement dû au soleil.

Plus précisément encore, l'invention concerne les dispositifs d'occultation de surfaces vitrées d'un véhicule, et en particulier les surfaces vitrées sensiblement verticales. L'invention est ainsi notamment destinée à équiper la partie supérieure d'une vitre de portière d'un véhicule automobile.

### 2. Art antérieur

Il est connu que sous certaines conditions de luminosité ou d'incidence rasante des rayons du soleil, il est nécessaire de protéger le conducteur et/ou les passagers de l'éblouissement provoqué par des rayons de soleil pouvant frapper la partie supérieure des surfaces vitrées sensiblement verticales du véhicule, telles que par exemple les vitres de portières, de pare-brise et/ou du hayon.

Une attention particulière doit être par ailleurs portée, pour des raisons évidentes de sécurité, aux surfaces vitrées situées à l'avant du véhicule, nécessaires à la bonne visibilité du conducteur.

D'autre part, la tendance actuelle est de concevoir des véhicules comportant des surfaces vitrées d'une taille de plus en plus importante notamment dans la partie supérieure du véhicule, par exemple au niveau du pavillon ou dans des zones proches du pavillon.

Ainsi, la plupart des véhicules automobiles sont équipés de palettes pare-soleil au niveau du pare-brise pour protéger le conducteur et le cas échéant son passager des rayons de soleil d'incidence frontale venant frapper le pare-brise, ou des rayons d'incidence latérale venant frapper la partie supérieure des vitres avant de portière. Classiquement, ces palettes sont réalisées sous la forme d'un panneau plein monté sur rotule pour permettre de placer la palette indifféremment le long du pare-brise ou de la partie supérieure de la vitre latérale, en position sensiblement verticale.

Un premier inconvénient de cette technique connue de palettes pare-soleil est qu'en cas de rayons de soleil d'incidence intermédiaire entre les directions latérale et frontale, les palettes de type connu ne permettent généralement pas de protéger le conducteur à la fois au niveau d'une vitre latérale et du pare-brise.

Un deuxième inconvénient de tels pare-soleil est que leur manipulation est malaisée, voire dangereuse notamment lors de la conduite, et qu'il est en outre nécessaire d'adapter en permanence manuellement la position de la palette en fonction des changements de direction du véhicule. Il est par ailleurs fréquent qu'un occupant du véhicule se cogne sur le bord d'une telle palette en sortant du véhicule, si celle-ci n'est pas rangée dans un logement prévu à cet effet.

Encore d'autres inconvénients de telles palettes sont qu'elles sont généralement :
- de taille réduite. Dans certains cas, notamment lorsque le soleil est bas, elles protègent donc de façon insuffisante ;
- mal adaptées à certains véhicules actuellement développés, qui présentent une surface vitrée galbée et/ou de contour complexe. Dans ce cas, un pare-soleil classique n'occulte qu'une portion limitée de la surface vitrée, et ne sert pratiquement à rien ;

On a ainsi développé une technique de stores à enrouleur pour vitre de véhicule et en particulier pour vitre de portière de véhicule, visant à augmenter la surface de couverture des zones vitrées lorsque cela est nécessaire. en complément de la protection apportée par une palette pare-soleil au niveau du pare-brise, notamment dans le cas d'une incidence intermédiaire de rayons du soleil.

La facture proposée pour un tel store à enrouleur est généralement classique et on fixe habituellement de tels stores de type connu sur le cadre fixe de la vitre de la portière. Un tel store est connu du document DE 10 2005 023 967 A1.

Cette technique, qui permet d'augmenter la protection visée, se révèle généralement efficace lorsque son installation peut être envisagée au niveau de la partie supérieure de la portière, par exemple par fixation d'un boîtier du tube à enrouleur d'un tel store sur la traverse supérieure du cadre de portière.

Un premier inconvénient de cette technique connue est l'encombrement d'un tel store notamment lors que sa toile est repliée.

Un autre inconvénient de cette technique est sa difficulté de mise en oeuvre lorsque l'espace est réduit au niveau de la partie supérieure de la surface vitrée à occulter et/ou lorsque le profil du contour cette dernière présente un fort galbe.

### 3. Objectifs de l'invention

L'invention a notamment pour objectif de pallier ces inconvénients de l'art antérieur.

Plus précisément, un objectif de l'invention est de fournir un store assurant une occultation satisfaisante dont la mise en oeuvre est simple et aisée. Ainsi, selon un mode de réalisation particulier de l'invention, un objectif de l'invention est de fournir un tel store permettant d'occulter une partie supérieure d'une vitre de portière.

Selon un aspect de l'invention, un objectif particulier de l'invention est qu'un tel store soit d'encombrement réduit.

Un autre objectif de l'invention est de fournir une telle technique, qui soit adaptée pour être montée sur des éléments fixes de véhicule de taille réduite, et par exemple sur des portières de véhicule présentant une partie supérieure de cadre de vitre de faible hauteur.

Encore un autre objectif de l'invention est de fournir une telle technique qui soit simple à utiliser et permette un déploiement et un repliement fiable et/ou automatisé de la surface d'occultation du store, notamment lorsque le profil de la surface à occulter est fortement incurvé et/ou galbé.

Un autre objectif de l'invention est de fournir une telle technique qui offre une souplesse de réglage.

### 4. Exposé de l'invention

Ces objectifs, ainsi que d'autres qui apparaîtront par la suite, sont atteints à l'aide d'un store pour une vitre de portière de véhicule, comprenant un tube à enrouleur solidaire d'une première extrémité d'une toile d'occultation.

Selon l'invention, ledit tube est logé dans un montant vertical d'un cadre de ladite vitre de portière, ladite toile étant prévue pour se déployer selon une direction sensiblement horizontale, au moins une portion d'une deuxième extrémité de ladite toile étant solidaire d'une tige d'entraînement guidée le long d'un traverse supérieure dudit cadre de portière, de façon que ladite toile puisse prendre au moins deux positions, une position repliée et une position déployée. Ladite tige est mobile en translation et en rotation, et, dans ladite position repliée, au moins une portion de ladite toile est enroulée autour de ladite tige d'entraînement.

Ainsi, selon une approche originale et particulièrement simple, l'invention propose d'assurer l'entraînement d'une extrémité de la toile par une tige, combinant par exemple un mouvement de translation et une rotation pour permettre de tirer la toile tout en enroulant ou déroulant une partie de la toile autour de cette dernière.

Dans la position repliée, une partie de la toile est enroulée autour de la tige, ce qui permet de diminuer l'épaisseur de toile enroulée sur le tube à enrouleur par rapport à un store à enrouleur classique. En d'autres termes, l'épaisseur du store se trouve réduite en répartissant la surface de toile enroulée entre la tige et le tube à enrouleur.

Selon un mode de réalisation particulièrement avantageux de l'invention, ladite tige est solidaire d'un élément roulant sur une surface de guidage.

Ainsi, le guidage en translation de la tige et l'entraînement de la tige sont mis en oeuvre simplement et de façon coordonnée. Par ailleurs le roulement de l'élément roulant sur la surface de guidage permet d'assurer une bonne précision sur la position de la deuxième extrémité de la toile. Il convient de noter qu'il peut être prévu, selon l'utilisation souhaitée, que l'élément roulant puisse rouler sans glissement sur la surface de guidage, ou au contraire avec glissement, par exemple dans le cas où on souhaite répartir sensiblement équitablement la quantité de toile enroulée sur la tige ou le tube à enrouleur lors du déploiement ou du repliement de la toile.

Selon un aspect particulier de l'invention, ladite surface de guidage est disposée sensiblement verticalement.

Ainsi, la surface de guidage peut être intégrée dans la traverse supérieure d'un cadre de portière, de façon à réduire l'épaisseur et plus généralement l'encombrement du store. Par ailleurs, l'invention permet un déploiement progressif de la toile de store selon la direction horizontale.

Dans un mode de réalisation particulier, ladite tige est solidarisée audit élément roulant selon une liaison sensiblement rigide.

Ainsi, le mouvement de l'élément roulant peut être transmis directement à la tige.

Au moins une portion de la surface de ladite toile est enroulée autour de ladite tige dans ladite position repliée.

Selon un mode de réalisation avantageux de l'invention, ladite toile est de forme sensiblement triangulaire ou trapézoïdale.

Ainsi la partie supérieure de la toile peut épouser la forme généralement non plane de la partie supérieure des vitres de portière.

Selon un autre mode de réalisation particulier de l'invention, un tel store comprend des moyens d'articulation de ladite tige par rapport audit élément roulant.

Ainsi, il est possible de maintenir en permanence la tige verticale lors d'un mouvement de l'élément roulant sur une surface incurvée.

Avantageusement, ledit tube à enrouleur et ladite tige sont sensiblement affleurants dans ladite position repliée.

Ainsi, on réduit l'encombrement du store dans cette position.

Selon un autre mode de réalisation particulier de l'invention, ledit élément roulant comprend une roue dentée roulant sur une surface de guidage appartenant au groupe comprenant :
- surface d'un câble torsadé de type « push-pull » ;
- surface d'une courroie crantée ;
- surface d'un câble poly-toron.

Ainsi, il n'est pas nécessaire de prévoir un rail pour guider l'extrémité de l'élément d'entraînement et le roulement de l'élément roulant sur la surface de guidage s'effectue sans glissement.

Selon un aspect particulier de l'invention, un store tel que décrit ci-dessus comprend des moyens d'entraînement en rotation de ladite roue dentée appartenant au groupe comprenant :
- câble torsadé de type « push-pull » ;
- courroie crantée ;
- câble poly-toron.

Ainsi, on réalise simplement un entraînement fiable de la roue dentée.

De façon avantageuse, les moyens d'entraînement de ladite roue dentée, et plus généralement de la tige, comprennent un moto-réducteur.

Ainsi, on obtient un store motorisé qui peut être actionné par une commande déportée.

Selon un autre aspect particulier de l'invention, les moyens d'entraînement coopèrent avec un capteur de luminosité pour commander au déploiement et/ou au repliement de ladite toile.

Selon encore un autre aspect particulier de l'invention, lesdits moyens d'entraînement de ladite roue dentée comprennent une patte de tirage.

Ainsi, le store peut être actionné manuellement.

Selon un mode de réalisation avantageux de l'invention, un tel store comprend au moins un élément d'appui de ladite tige et/ou de ladite portion de ladite deuxième extrémité de toile sur ladite vitre appartenant au groupe comprenant :
- roulette ;
- patin élastique ;
- mousse.

Ainsi, le guidage et le maintien de la tige est amélioré notamment dans le cas où celle-ci est de grande dimension.

L'invention concerne également les portières, ou les parties supérieures de portière, et les véhicules automobiles équipés d'au moins un des stores d'occultation décrits ci-dessus.

### 5. Liste des figures

D'autres caractéristiques et avantages de l'invention apparaîtront à la lecture de la description suivante d'un mode de réalisation de l'invention, donné à titre de simple exemple illustratif et non limitatif, et des dessins annexés parmi lesquels :
- les figures 1A et 1B illustrent un mode de réalisation de l'invention, respectivement lorsque le store est déployé (figure 1A) et replié (figure 1B) ;
- la figure 2 présente un détail du dispositif d'entraînement de la tige du store de la figure 1A ou 1B en vue de dessus.

### 6. Description d'un mode de réalisation de l'invention

### 6.1. Rappel du principe de l'invention

L'invention repose donc sur une nouvelle approche des stores d'occultation pour surfaces vitrées verticales de véhicule, telles que notamment la partie supérieure d'une vitre de portière, mettant en oeuvre un entraînement et un enroulement ou un déroulement de la toile du store grâce à une tige mobile à la fois en translation et en rotation pour permettre d'enrouler au moins partiellement de la toile autour de la tige en position repliée.

### 6.2. Exemple de mode de réalisation de l'invention

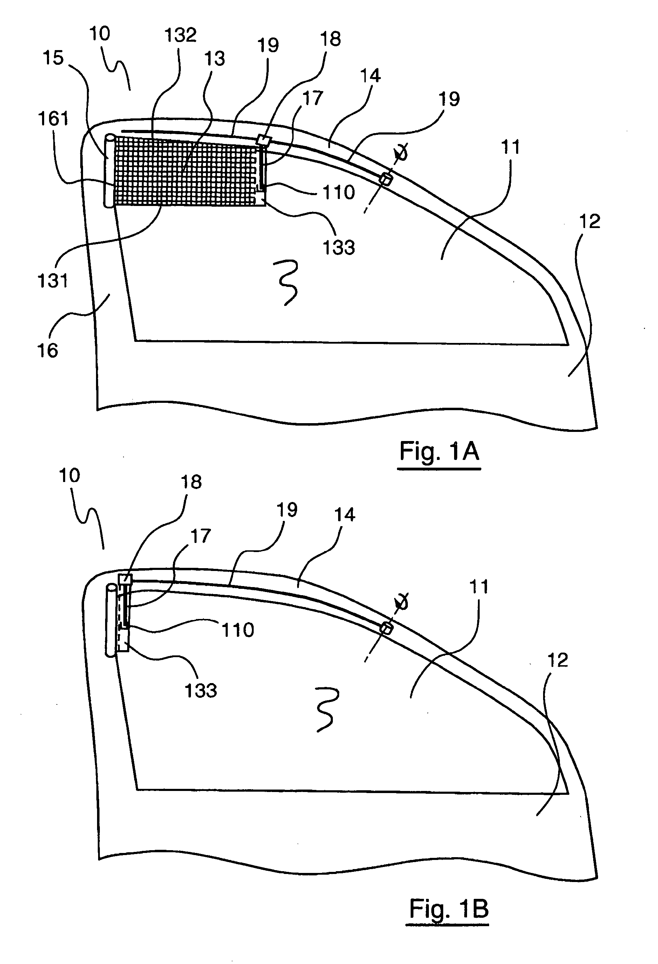

Les figures 1A et 1B illustrent un premier mode de réalisation de l'invention selon lequel la toile opaque du store est déployée horizontalement le long d'une partie supérieure d'une vitre 11 de portière avant 12 de véhicule. Sur la figure 1A, la toile de store est dépliée (ou en cours de dépliement), alors qu'elle est repliée sur la figure 1B.

Comme on le voit sur la figure 1A dans une position dépliée, le store 10 comprend une toile opaque 13 dont la portion dépliée présente une forme sensiblement trapézoïdale pour que son bord inférieur 131 reste sensiblement horizontal lors du déploiement ou du repliement de la toile 13 et que son bord supérieur 132 soit affleurant à la traverse 14 du cadre de vitre de la portière 12.

La toile 13 est enroulée à une première extrémité sur un tube à enrouleur 15 pourvu d'un ressort de rappel de la toile de façon à la maintenir tendue en permanence. Le tube 15 est monté sur le montant arrière 16 du cadre de vitre de la portière et masqué à la vue par la garniture fixée sur ce cadre. Une fente 161 permet le passage et le guidage de la toile lors de son déploiement.

Une portion de la deuxième extrémité de la toile est enroulée sur une tige d'entraînement courte 17 articulée à un élément roulant 18 sur la surface de guidage d'un brin de câble torsadé 19. La portion inférieure 133 de cette deuxième extrémité de la toile pend naturellement sous la tige 17 en conservant une forme acceptable sous l'effet de sa propre rigidité.

La présence d'une articulation de type rotule entre l'élément roulant 18 et la tige 17 permet à celle-ci d'être guidée le long de la surface de guidage 19, dont le profil est confondu avec celui de la traverse 14, en conservant en permanence une direction verticale de façon à ce que la toile présente un aspect satisfaisant quelle que soit la position de déploiement.

Un patin élastique 110 solidarisé à la tige 17 par l'intermédiaire d'une cornière (non représentée) permet de maintenir la tige 17 en appui sur la surface de la vitre 11, afin d'améliorer le guidage de la toile 13.

Dans des variantes de ce mode de réalisation, il peut être prévu un élément d'appui de la tige et/ou de la deuxième extrémité de la toile sur la vitre tel que, par exemple, une roulette ou un bloc de mousse.

On note en outre qu'avantageusement, les risques pour l'occupant du véhicule de se blesser sur la tige 17 sont limités puisqu'une épaisseur de toile reste en permanence enroulée sur cette dernière.

Lors du repliement de la toile 13, la rotation de la tige 17 autour d'elle-même, accompagnant son déplacement en translation, permet d'enrouler progressivement une partie de la surface déployée de toile autour de celle-ci, l'autre partie de la surface étant enroulée sur le tube à enrouleur 15 sous l'effet de son ressort de rappel.

En position repliée, comme illustré en figure 1B, la toile est enroulée de façon répartie sur le tube 15 et la tige 17, qui sont sensiblement affleurants dans cette position de façon à limiter l'encombrement du store dans cette position.

Bien entendu le nombre de tour de toile enroulé sur le tube et la tige peut être adapté en fonction des diamètres d'enroulement respectifs du tube 15 et de la tige 17 de façon à obtenir un store d'épaisseur minimale.

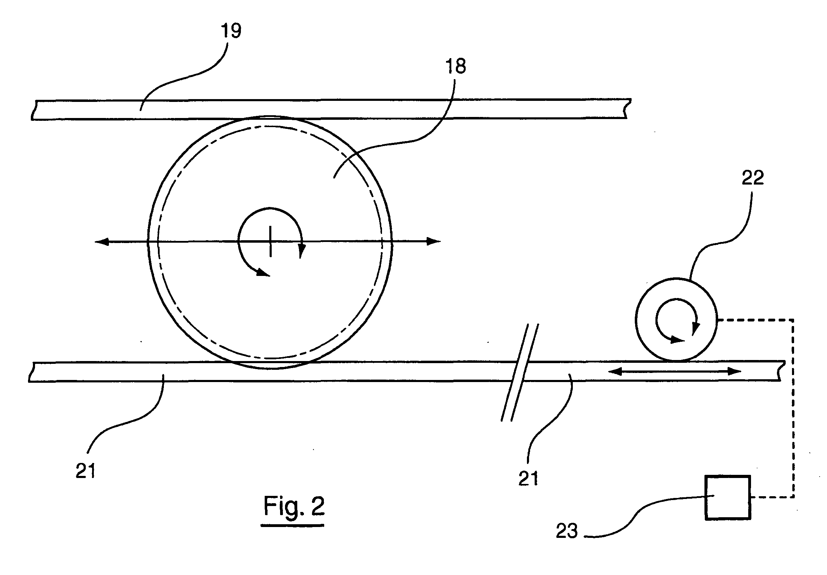

La figure 2 présente un détail du dispositif d'entraînement de la tige 17, en vue de dessus.

Dans ce mode de réalisation de l'invention, l'élément roulant 18 est une roue dentée roulant sans glissement sur le câble torsadé fixe 19. On note ainsi qu'outre sa fiabilité, et son coût compétitif, un tel dispositif de guidage, dont les performances sont éprouvées, autorise un positionnement précis de la tige et donc un ajustement aisément contrôlable de la surface de toile déployée.

Dans des variantes du mode de réalisation ici décrit, il peut également être prévu de guider la roue dentée 18 sur la surface d'un courroie crantée ou d'un câble poly-toron.

Un câble torsadé mobile 21 de type à poussée-tirage (ou « push-pull » en anglais) permet d'entraîner en rotation, et donc également de déplacer, la roue dentée 18 lors du coulissement de ce câble le long de la traverse 14. Le câble 21 est mis en mouvement au moyen d'un moto-réducteur 22 à roue et vis sans fin fixé sur la traverse 14.

Il convient de noter que le moto-réducteur d'un tel store peut être installé à distance du conducteur, ce qui représente un confort acoustique appréciable en fonctionnement.

Le moto-réducteur 22 est mis en route dans ce mode de réalisation en fonction de la consigne délivrée par un capteur de luminosité 23 solidaire de la portière.

### 6.3. Autres caractéristiques et avantages de l'invention

La présente invention n'est bien sûr pas limitée au mode de réalisation qui vient d'être décrit. Au contraire, de nombreuses variantes peuvent être envisagées, et notamment :
- la toile 13 peut être réalisée à partir d'un tissus perforée, et/ou être recouverte d'un couche de revêtement aluminisé pour permettre de réfléchir au moins partiellement le rayonnement solaire et/ou comprendre une bande ourlet ;
- les moyens d'entraînement de la roue dentée peuvent comprendre un patte de tirage de façon à permettre un déploiement ou un repliement manuel de la toile du store ;
- le store peut être préalablement intégré au garnissage de la portière pour être ensuite monté sur cette dernière et/ou peut être pourvu d'éléments de fixation sur la portière ;
- les moyens d'entraînement de l'élément roulant et de la tige peuvent être actionnés par un moto-réducteur à planétaire.

D'autre part, il peut être envisagé d'utiliser un tel store pour occulter tout autre surface sensiblement verticale du véhicule, par exemple au niveau du pare-brise, d'une vitre de custode ou du hayon du véhicule, et plus généralement toute surface vitrée du véhicule, en prévoyant une longueur de tige adaptée afin d'éviter le fléchissement de la deuxième extrémité de la toile sous l'effet de la pesanteur.

## Revendications

1. Store adapté pour être monté sur des éléments fixes d'un cadre de vitre d'une portière de véhicule, comprenant un tube à enrouleur (15) solidaire d'une première extrémité d'une toile d'occultation (13),
**caractérisé en ce que** ledit tube est destiné à être logé dans un montant vertical (16) du cadre de vitre (11) de portière (12), ladite toile (13) étant prévue pour se déployer selon une direction sensiblement horizontale, au moins une portion d'une deuxième extrémité de ladite toile (13) étant solidaire d'une tige d'entraînement (17) mobile en translation et en rotation, et guidée le long d'une traverse supérieure dudit cadre de portière, de façon que ladite toile (13) puisse prendre au moins deux positions, une position repliée et une position déployée, et **en ce que**, dans ladite position repliée, au moins une portion de ladite toile (13) est enroulée autour de ladite tige d'entraînement (17).

2. Store selon la revendication 1, **caractérisé en ce que** ladite tige (17) est solidaire d'un élément (18) roulant sur une surface de guidage.

3. Store selon la revendication 2, **caractérisé en ce que** ladite surface de guidage est disposée sensiblement verticalement.

4. Store selon l'une quelconque des revendications 1 à 3, **caractérisé en ce que** ladite toile (13) est de forme sensiblement triangulaire ou trapézoïdale.

5. Store selon l'une quelconque des revendications 2 à 4, **caractérisé en ce que** ladite tige (17) est solidarisée audit élément roulant (18) selon une liaison essentiellement rigide.

6. Store selon l'une quelconque des revendications 2 à 4, **caractérisé en ce qu'**il comprend des moyens d'articulation de ladite tige (17) par rapport audit élément roulant (18).

7. Store selon l'une quelconque des revendications 1 à 6, **caractérisé en ce que** ledit tube à enrouleur (15) et ladite tige (17) sont sensiblement affleurant dans ladite position repliée.

8. Store selon l'une quelconque des revendications 1 à 7, **caractérisé en ce que** ledit élément roulant comprend une roue dentée (18) roulant sur une surface de guidage appartenant au groupe comprenant :
- surface d'un câble torsadé (19) de type « push-pull » ;
- surface d'une courroie crantée ;
- surface d'un câble poly-toron.

9. Store selon l'une quelconque des revendications 1 à 8, **caractérisé en ce qu'**il comprend des moyens d'entraînement en rotation de ladite tige appartenant au groupe comprenant :
- câble torsadé (21) de type « push-pull » ;
- courroie crantée ;
- câble poly-toron.

10. Store selon l'une quelconque des revendications 1 à 9, **caractérisé en ce qu'**il comprend un moto-réducteur (22) pour actionner le déplacement de ladite tige (17).

11. Store selon l'une quelconque des revendications 1 à 10, **caractérisé en ce qu'**il comprend au moins un capteur de luminosité pour commander au déploiement et/ou au repliement de ladite toile (13).

12. Store l'une quelconque des revendications 1 à 10, **caractérisé en ce qu'**il comprend une patte de tirage associée à ladite tige (17).

13. Store selon l'une quelconque des revendications 1 à 12, **caractérisé en ce qu'**il comprend au moins un élément d'appui de ladite tige (17) et/ou de ladite portion de ladite deuxième extrémité de toile (13) sur ladite vitre appartenant au groupe comprenant :
- roulette ;
- patin élastique ;
- mousse.

14. Portière (12) de véhicule comprenant un store d'occultation d'au moins une portion d'une vitre, ledit store comprenant un tube à enrouleur (15) solidaire d'une première extrémité d'une toile d'occultation (13),
**caractérisé en ce que** ledit tube (15) est logé dans un montant vertical (16) d'un cadre de ladite vitre (11) de portière (12), ladite toile (13) étant prévue pour se déployer selon une direction sensiblement horizontale, au moins une portion d'une deuxième extrémité de ladite toile (13) étant solidaire d'une tige d'entraînement (17) mobile en translation et en rotation, et guidée le long d'un traverse supérieure dudit cadre de portière (12), de façon que ladite toile (13) puisse prendre au moins deux positions, une position repliée et une position déployée, et **en ce que**, dans ladite position repliée, au moins une portion de ladite toile (13) est enroulée autour de ladite tige d'entraînement (17).

15. Portière selon la revendication 14, **caractérisé en ce que** ladite toile (13) occulte une partie supérieure de ladite surface vitrée.

## Patentansprüche

1. Rollladen, der angepasst ist, auf feste Elemente eines Fensterrahmens einer Fahrzeugtür montiert zu werden, und der ein mit einem ersten Ende eines Verdunkelungstuchs (13) verbundenes Rohr zum Aufwickeln (15) aufweist, **dadurch gekennzeichnet, dass** das Rohr bestimmt ist, in einer vertikalen Säule (16) des Fensterrahmens (11) der Tür (12) angebracht zu werden, wobei das Tuch (13) vorgesehen ist, sich entlang einer etwa horizontalen Richtung auszubreiten, wobei wenigstens ein Teil eines zweiten Endes des Tuchs (13) mit einer Antriebsstange (17) verbunden ist, die in Translation und in Rotation beweglich ist, und entlang einer oberen Traverse des Türrahmens geführt wird, so dass das Tuch (13) wenigstens zwei Stellungen annehmen kann, eine verstaute Stellung und eine ausgebreitete Stellung, und dadurch, dass wenigstens ein Teil des Tuchs (13) in der verstauten Stellung um die Antriebsstange (17) gewickelt ist.

2. Rollladen nach Anspruch 1, **dadurch gekennzeichnet, dass** die Stange (17) mit einem Element (18), das auf einer Führungsoberfläche rollt, verbunden ist.

3. Rollladen nach Anspruch 2, **dadurch gekennzeichnet, dass** die Führungsoberfläche in etwa vertikal bereitgestellt ist.

4. Rollladen nach einem der Ansprüche 1 bis 3, **dadurch gekennzeichnet, dass** das Tuch (13) in etwa dreieckig oder trapezförmig ist.

5. Rollladen nach einem der Ansprüche 2 bis 4, **dadurch gekennzeichnet, dass** die Stange (17) mit dem Rollelement (18) über eine im Wesentlichen starre Bindung verbunden ist.

6. Rollladen nach einem der Ansprüche 2 bis 4, **dadurch gekennzeichnet, dass** es Gelenkmittel der Stange (17) gegenüber dem Rollelement (18) aufweist.

7. Rollladen nach einem der Ansprüche 1 bis 6, **dadurch gekennzeichnet, dass** das Rohr zum Aufwickeln (15) und die Stange (17) in etwa gleitend in der verstauten Stellung sind.

8. Rollladen nach einem der Ansprüche 1 bis 7, **dadurch gekennzeichnet, dass** das Rollelement ein Zahnrad (18) aufweist, das auf einer Führungsoberfläche rollt, die zur Gruppe gehört umfassend:
- Oberfläche eines verdrillten Kabels (19) des Typs "Druck-Zug" (engl.: "push-pull");
- Oberfläche eines Zahnriemens;
- Oberfläche eines Polystrangkabels.

9. Rollladen nach einem der Ansprüch 1 bis 8, **dadurch gekennzeichnet, dass** er Rotationsantriebsmittel der Stange aufweist, die zur Gruppe gehören umfassend:
- Verdrilltes Kabel (21) des Typs "Druck-Zug" (engl.: "push-pull");
- Zahnriemen;
- Polystrangkabel.

10. Rollladen nach einem der Ansprüche 1 bis 9, **dadurch gekennzeichnet, dass** er einen Getriebemotor (22) zum Antreiben der Verschiebung der Stange (17) aufweist.

11. Rollladen nach einem der Ansprüche 1 bis 10, **dadurch gekennzeichnet, dass** er wenigstens einen Helligkeitssensor zum Steuern des Ausbreitens und/oder des Verstauens des Tuchs (13) aufweist.

12. Rollladen nach einem der Ansprüche 1 bis 10, **dadurch gekennzeichnet, dass** er eine der Stange (17) zugeordnete Zuglasche aufweist.

13. Rollladen nach einem der Ansprüche 1 bis 12, **dadurch gekennzeichnet, dass** er wenigstens ein Abstützelement der Stange (17) und/oder des Teils des zweiten Endes des Tuchs (13) auf der Fensterscheibe aufweist, das zur Gruppe gehört umfassend:
- Rolle;
- elastisches Polster;
- Schaum.

14. Fahrzeugtür (12), die einen Verdunkelungsrollladen wenigstens eines Teils einer Fensterscheibe aufweist, wobei der Rollladen ein Rohr zum Aufwickeln (15) aufweist, das mit einem ersten Ende eines Verdunkelungstuchs (13) verbunden ist,
**dadurch gekennzeichnet, dass** das Rohr (15) in einer vertikalen Säule (16) eines Rahmens der Fensterscheibe (11) der Tür (12) angebracht ist, wobei das Tuch (13) vorgesehen ist, sich entlang einer etwa horizontalen Richtung auszubreiten, wobei wenigstens ein Teil eines zweiten Endes des Tuchs (13) mit einer Antriebsstange (17) verbunden ist, die in Translation und in Rotation beweglich ist, und entlang einer oberen Traverse des Türrahmens (12) geführt wird, so dass das Tuch (13) wenigstens zwei Stellungen annehmen kann, eine verstaute Stellung und eine ausgebreitete Stellung, und dadurch, dass wenigstens ein Teil des Tuchs (13) in der verstauten Stellung um die Antriebsstange (17) gewickelt ist.

15. Tür nach Anspruch 14, **dadurch gekennzeichnet, dass** das Tuch (13) einen oberen Teil der verglasten Oberfläche verdunkelt.

## Claims

1. Blind adapted to be mounted on fixed elements of a window frame of a vehicle door, said blind comprising a winder tube (15) which is integral with a first end of a screening cloth (13),
**characterised in that** the said tube is intended to be housed in a vertical upright (16) of the window frame (11) of the door (12), the said cloth (13) being designed to be deployed in a substantially horizontal direction, at least a portion of a second end of the said cloth (13) being integral with an entraining rod (17), which is movable in translation and in rotation, and guided along an upper crosspiece of the said door frame, in such a way that the said cloth (13) is able to assume at least two positions, a rolled-up position and a deployed position, and **in that**, in the said rolled-up position, at least a portion of the said cloth (13) is wound round the said entraining rod (17) .

2. Blind according to Claim 1, **characterised in that** the said rod (17) is integral with an element (18) which runs on a guide surface.

3. Blind according to Claim 2, **characterised in that** the said guide surface is disposed substantially vertically.

4. Blind according to any of Claims 1 to 3, **characterised in that** the said cloth (13) is substantially triangular or trapezoidal in shape.

5. Blind according to any of Claims 2 to 4, **characterised in that** the said rod (17) is fastened to the said running element (18) in line with an essentially rigid link.

6. Blind according to any of Claims 2 to 4, **characterised in that** it comprises means for the articulation of the said rod (17) in relation to the said running element (18) .

7. Blind according to any of Claims 1 to 6, **characterised in that** the said winder tube (15) and the said rod (17) are substantially flush when in the said rolled-up position.

8. Blind according to any of Claims 1 to 7, **characterised in that** the said running element (18) comprises a toothed wheel (18) which runs on a guide surface which belongs to the group comprising:
- the surface of a twisted cable (19) of the "push-pull" type;
- the surface of a toothed belt;
- the surface of a multi-strand cable.

9. Blind according to any of Claims 1 to 8, **characterised in that** it comprises means for entraining the said rod in rotation which belong to the group comprising:
- a twisted cable (21) of the "push-pull" type;
- a toothed belt;
- a multi-strand cable.

10. Blind according to any of Claims 1 to 9, **characterised in that** it comprises a motorised reduction gear (22) for driving the displacement of the said rod (17).

11. Blind according to any of Claims 1 to 10, **characterised in that** it comprises at least one brightness sensor for exercising control over the deployment and/or rolling-up of the said cloth (13).

12. Blind according to any of Claims 1 to 10, **characterised in that** it comprises a pull-tab which is associated with the said rod (17).

13. Blind according to any of Claims 1 to 12, **characterised in that** it comprises at least one element for supporting the said rod (17) and/or the said portion of the said second end of the cloth (13) on the said window, which element belongs to the group comprising:
- a castor;
- an elastic runner;
- foam rubber.

14. Vehicle door (12) comprising a blind for screening at least a portion of a window, the said blind comprising a winder tube (15) which is integral with a first end of a screening cloth (13),
**characterised in that** the said tube (15) is housed in a vertical upright (16) of a frame of the said window (11) of the door (12), the said cloth (13) being designed to be deployed in a substantially horizontal direction, at least a portion of a second end of the said cloth (13) being integral with an entraining rod (17) which is movable in translation and in rotation, and guided along an upper crosspiece of the said frame of the door (12), in such a way that the said cloth (13) is able to assume at least two positions, a rolled-up position and a deployed position, and **in that**, in the said rolled-up position, at least a portion of the said cloth (13) is wound round the said entraining rod (17).

15. Door according to Claim 14, **characterised in that** the said cloth (13) screens an upper part of the said glazed surface.
